# EUROPÄISCHE PATENTSCHRIFT

(11) **EP 0 754 362 B1**
(45) Veröffentlichungstag und Bekanntmachung des Hinweises auf die Patenterteilung: **03.03.1999**
(21) Anmeldenummer: 95915129.1
(22) Anmeldetag: 05.04.1995
(51) Int. Cl.: H02K 3/12, H02K 3/26

(54) **DREIPHASIGE ELEKTRISCHE MASCHINE MIT VERFLOCHTENEN LEITERSCHICHTEN**
THREE-PHASE ELECTRIC MACHINE WITH PLAITED CONDUCTOR LAYERS
MACHINE ELECTRIQUE TRIPHASEE A COUCHES CONDUCTRICES ENTRELACEES

(30) Priorität: 06.04.1994 DE 4411750
(43) Veröffentlichungstag der Anmeldung: 22.01.1997
(73) Patentinhaber: HILL, Wolfgang, 76135 Karlsruhe (DE)
(72) Erfinder: HILL, Wolfgang, 76135 Karlsruhe (DE)
(86) Internationale Anmeldenummer: DE9500457
(87) Internationale Veröffentlichungsnummer: WO9528027

(56) Entgegenhaltungen:
- EP-A- 0 091 123
- WO-A-86/03351
- WO-A-93/03534
- DE-C- 4 321 236
- DE-U- 9 305 152
- GB-A- 888 515
- US-A- 4 645 961

## Beschreibung

Die Erfindung betrifft eine dreiphasige elektrische Maschine gemäß dem Oberbegriff des Anspruch 1 sowie ein Verfahren zur Herstellung einer derartigen Maschine (siehe GB-A-888515). Aus der *GB 13 29 205* sind Leiterschichten für Linearmaschinen bekannt, die in einer Form als Gußteil hergestellt werden. Da die Leiterteile unabhängig voneinander hergestellt und dann ineinandergeschoben werden, sind teure Formen für eine Vorfertigung mit geringen Toleranzen erforderlich. Weiterhin vermindert sich die Leiterhöhe sprunghaft am Nutende, wodurch ein kleiner kritischer Querschnitt erzeugt wird. In den Wickelköpfen liegen die Leiterteile aller Phasen flächig übereinander, wodurch dort große Hohlräume und in dreiphasigen Leiterschichten in den Wickelköpfen drei Teilschichten entstehen.

Der Erfindung liegt daher die Aufgabe zugrunde eine dreiphasige elektrische Maschine mit einer geschichteten Wicklung, deren Leiterstränge teilweise in einen weichmagnetischen Körper angeordneten sind, derart weiter zu bilden, daß eine gleichmäßige Raumausnutzung erreicht und die Herstellung vereinfacht wird.

Die Aufgabe wird erfindungsgemäß durch die Merkmale des Anspruch 1 bzw. 4 gelöst.

Alle Leiterstränge einer dreiphasigen Leiterschicht sind baugleich, wobei der Leiterverlauf sich alle vier Polteilungen wiederholt und ein Leiterstrang in dieser Periode in beiden Wickelköpfen jeweils zwei in unterschiedlichen Schichthälften angeordnete Leiterteilstrecken aufweist. Im Magnetfeld nimmt ein Leiterstrang stets die gesamte Schichthöhe ein, womit Übergänge zwischen zwei Schichthälften innerhalb eines Wickelkopfdurchganges vermieden werden. Die dreiphasige Leiterschicht besteht trotzdem in den Wickelköpfen aus lediglich zwei Teilschichten. Zusätzlich werden die Wickelköpfe vollständig und gleichmäßig ausgenutzt, indem in jeder Wickelkopfhälfte stets Leiterteilstrecken der drei Leiterstränge tangential aufeinanderfolgen und dabei nur durch dünne Isolierschichten getrennt werden. Eine Querschnittsverengung am Nutwickelkopfübergang wird vermieden, indem die Leiterbreite beim Verlassen der Nut zunächst in Richtung der Nutbreite vergrößert und die Leiterhöhe erst weiter im Wickelkopf halbiert wird.

Diese optimale Raumausnutzung ist für dreiphasige Leiterschichten nur möglich, wenn die drei Leiterstränge ineinander verflochten sind, d.h. die Leiterstränge einer Schicht sind nicht unabhängig voneinander sondern nur in einem Arbeitschritt gemeinsam herstellbar. Neben dem Verschweißen vorgefertigter Teile im Nutbereich eignen sich hierzu Verfahren in denen Leiterschichten und Isolierschichten abwechselnd hergestellt werden. Mit Dick- und Dünnschichttechniken sind so extrem flache Mini- und Mikromotoren vollautomatisch herstellbar.

Die **Zeichnungen** stellen vorteilhafte Ausführungsformen der Erfindung dar.
- Fig. 1: zeigt die Masken für die Herstellung von dreiphasigen Leiterschichten;
- Fig. 2: zeigt den räumlichen Aufbau der Leiterschicht aus Fig. 1;
- Fig. 3: zeigt die Reihenschaltung von drei übereinanderliegenden Abschnitten eines Leiterstranges aus Fig. 2.

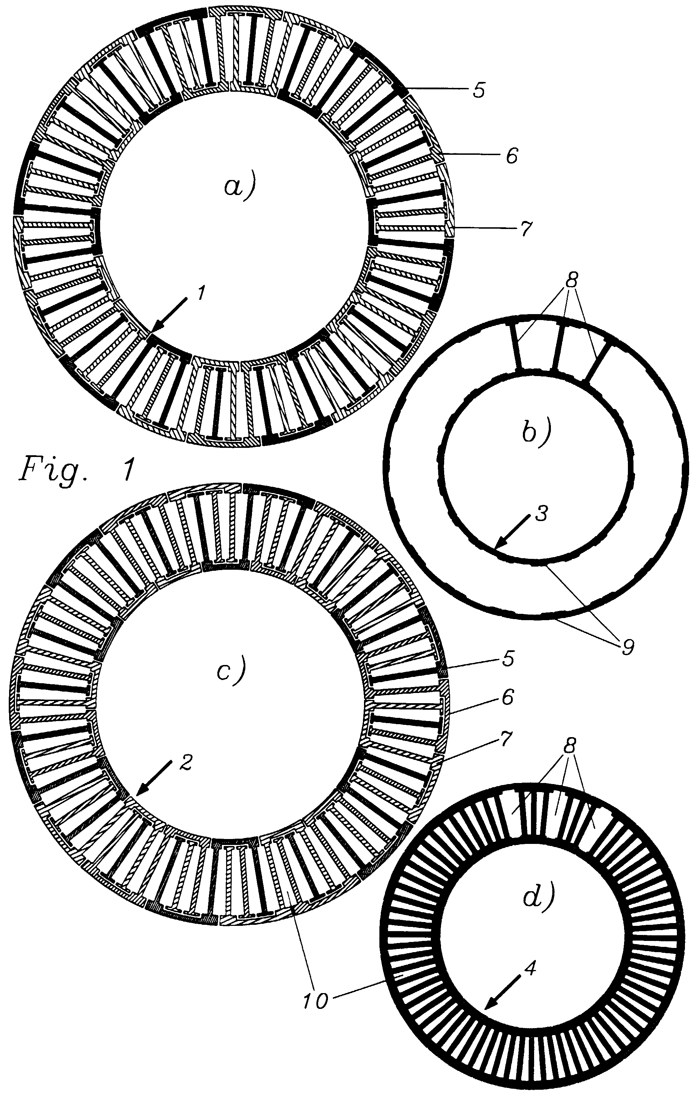

In **Fig. 1** sind links die beiden Leitermasken **1**, **2** und rechts etwas kleiner die beiden Isoliermasken **3**, **4** für eine 24-polige, dreiphasige Leiterschicht dargestellt. Das Material wird flächig aufgetragen, wobei auch bestehende Vertiefungen ausfüllt werden. Nach dem Belichten mit der entsprechenden Maske **1** bis **4** werden die nicht schraffierten Flächen wieder abgetragen. Die schraffierten Flächen der Leitermasken **1** und **2** stellen somit Leiterteilstrecken der drei Leiterstränge **5** bis **7** dar. Pro Schichthälfte treten nur zwei unterschiedliche Bauformen auf, deren Zuordnung zur jeweiligen Phase anhand der unterschiedlichen Schraffur möglich ist. In der Isoliermaske **3** für die Schichtmitte verbleibt außer in den drei Teilstrecken **8**, an denen ein Schichtwechsel erfolgt, nur in den Wickelköpfen **9** Isoliermaterial. Dagegen trennt die untere Isoliermaske **4** zwei baugleiche, dreiphasige Leiterschichten, weshalb außer an den Übergangsstellen **8** flächendeckend Isoliermaterial verbleibt. Die Aussparungen **10** innerhalb der Schichten sind für einen magnetisch leitenden Werkstoff - z.B. Eisenpulver oder Ferrit - vorgesehen.

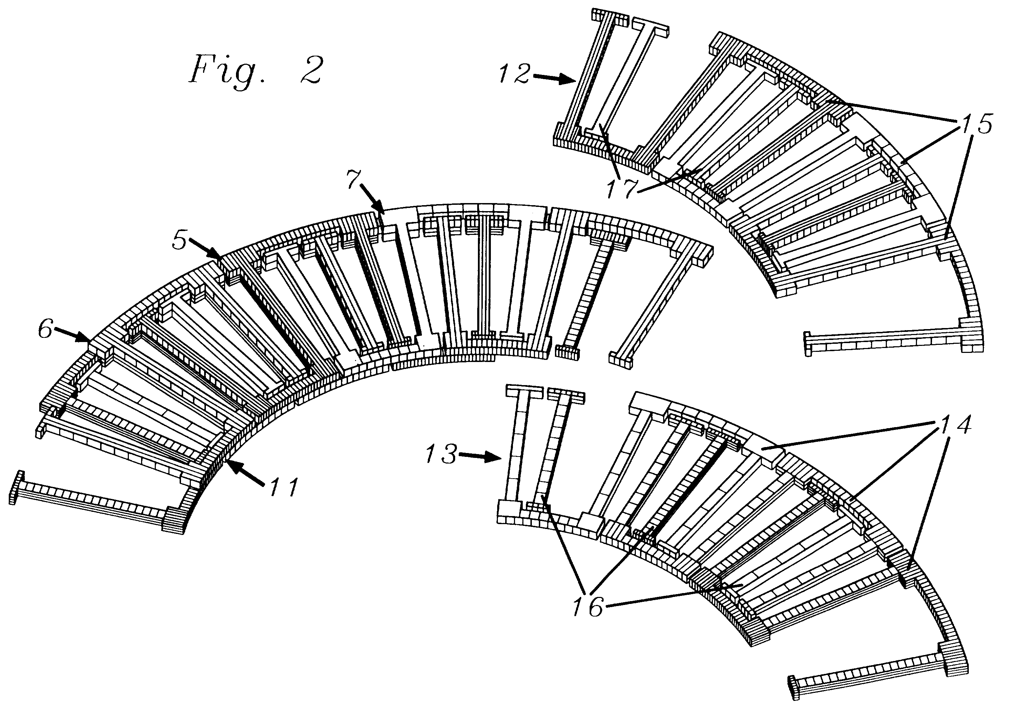

**Fig. 2** zeigt den Aufbau der dreiphasigen, verflochtenen Leiterschicht **11** aus Fig. 1 anhand einer räumlichen Darstellung eines Umfangsauschnittes, wobei die wieder unterschiedlich dicht schraffierten Leiterstränge **5** bis **7** der beiden Schichthälften **12**, **13** als aus ebenen Blechschnitten zusammengesetzt erscheinen. In der rechten Bildhälfte sind die beiden Schichthälften in Richtung der Nuttiefe auseinandergezogen, damit die Bauformen besser erkennbar sind. Die drei Leiterstränge **5** bis **7** bestehen aus jeweils vier unterschiedlich angeordneten Leiterteilstrecken **14** bis **17** die zusammen vier Polteilungen überbrücken, wobei sowohl die kleinen Nutstabteile **16**, **17** für die Nutdurchgänge ohne Schichthälftenwechsel als auch die großen Leiterteilstrecken **14**, **15** baugleich sind. Da die drei Leiterstränge baugleich sind besteht die gesamten dreiphasigen Leiterschicht **11** nur aus zwei unterschiedlichen Leiterteilstrecken.

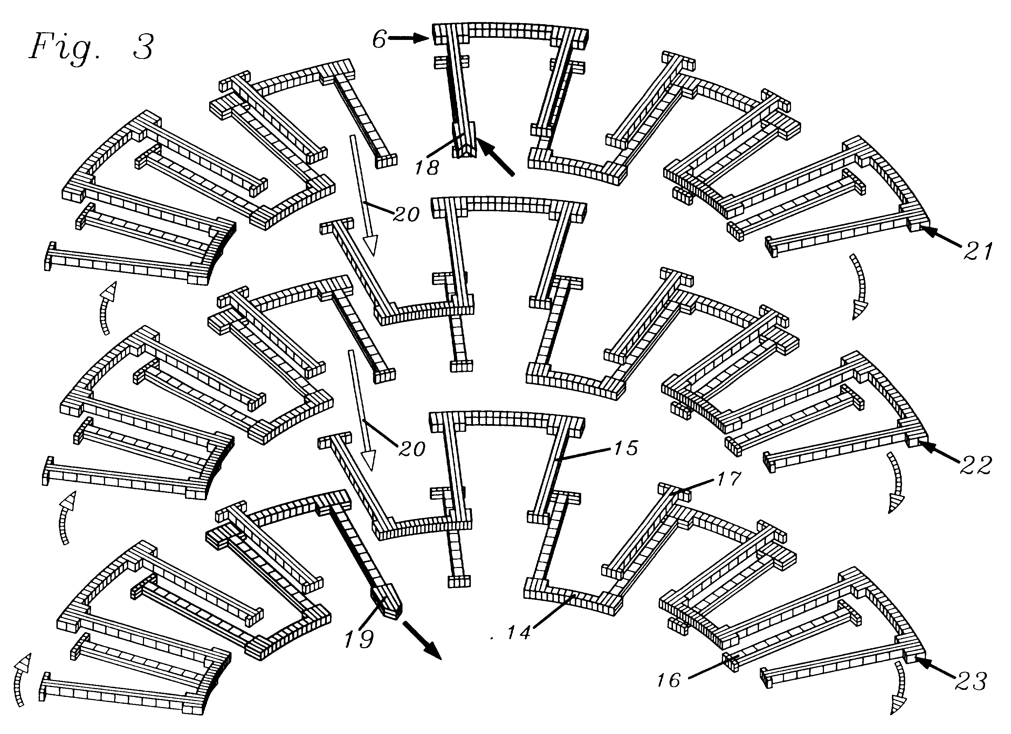

In **Figur 3** ist nun der Verlauf des Leiterstränges **6** aus Fig. 2 in allen Schichten **21** bis **22** einer dreischichtigen Wicklung dargestellt. Hierbei wurde der Umfangsauschnitt gewählt in dem die Stromzu- und -ableitung **18**, **19** sowie die Schichtwechsel **20** erfolgen. Außer aus den beiden Bauformen **14**, **15** bzw. **16**, **17** besteht die komplette Wicklung nur aus zwei weiteren Bauformen **18** und **19**. In der obersten Schicht **21** umläuft der Leiterstrang ausgehend von der Zuleitung **18** im Uhrzeigersinn den gesamten Umfang der Maschine minus einer Polteilung.

Am Ende ist die letzte Leiterteilstrecke in der unteren Schichthälfte mit der ersten Leiterteilstrecke in der oberen Schichthälfte der darunter angeordneten mittleren Schicht **22** verbunden. Nach einem weiteren vollständigen Umlauf wechselt der Leiterstrang in der Wechselnut zur unteren Schicht **23** in der nach dem dritten Umlauf wieder aus der Wechselnut die Ableitung **19** erfolgt. Die drei Wechselnuten einer Maschine sollten um eine halbe Leiterschichtdicke tiefer als die übrigen Nuten ausgeführt werden, um eine Verengung des Leiterquerschnitts in der letzten Leiterteilstrecke **19** zu vermeiden.

## Patentansprüche

1. Dreiphasige elektrische Maschine mit einer geschichteten Wicklung, deren Leiterstränge (5 bis 7) teilweise in einen weichmagnetischen Körper angeordneten sind, wobei Leiterstränge unterschiedlicher Phasen innerhalb einer Leiterschicht (11) angeordnet sind,
**dadurch gekennzeichnet**, daß alle Leiterstränge (5 bis 7) einer dreiphasigen Leiterschicht (11) baugleich sind, wobei Leiterteilstrecken (14 bis 17) eines Leiterstranges (6) die in einem Wickelkopf (9) in Bewegungsrichtung aufeinanderfolgen in Schichthälften (12, 13) der Leiterschicht (11) mit unterschiedlichem Abstand zum Luftspalt angeordnet sind.

2. Dreiphasige elektrische Maschine nach Anspruch 1,
**dadurch gekennzeichnet**, daß die Leiterhöhe der Leiterstränge (5 bis 7) im Magnetfeld der Schichthöhe und in den in Bewegungsrichtung verlaufenden Teilbereichen der halben Schichthöhe entspricht, wobei die Änderung der Leiterhöhe jeweils in einem in etwa der halben Nutbreite entsprechenden Abstand vor der Stirnseite des weichmagnetischen Körpers erfolgt.

3. Mehrphasige elektrische Maschine nach Anspruch 1,
**dadurch gekennzeichnet**, daß die Verbindung (20) von Leiterteilstrecken (14 bis 17) eines Leiterstranges (6) aus in Richtung der Nuttiefe aufeinanderliegenden, dreiphasigen Leiterschichten (21 bis 23) in Leiterbereichen erfolgt, die im Magnetfeld liegen.

4. Verfahren zur Herstellung einer dreiphasigen elektrischen Maschine mit einer geschichteten Wicklung, deren Leiterstränge teilweise in einen weichmagnetischen Körper angeordneten sind, wobei Leiterstränge unterschiedlicher Phasen innerhalb einer Leiterschicht (11) angeordnet sind,
**dadurch gekennzeichnet**, daß alle drei Leiterstränge einer dreiphasigen Wicklungsschicht gleichzeitig in einem Arbeitschritt hergestellt werden, indem abwechselnd Schichten aus Isoliermaterial und Leitermaterial aufgetragen werden.

5. Verfahren zur Herstellung einer dreiphasigen elektrischen Maschine nach Anspruch 4,
**dadurch gekennzeichnet**, daß beim Herstellen einer dreiphasigen Leiterschicht nur vier Masken, jeweils zwei für Isolierschichten und Leiterschichten nacheinander eingesetzt werden.

## Claims

1. A three-phase electric machine with a layered winding, the conductor lanes (5 to 7) of said winding being partially arranged in a soft magnetic body, said conductor lanes being of different phases and being arranged within a conductor layer (11),
wherein all conductor lanes (5 to 7) of a three-phase conductor layer are of identical design and wherein partial conductor sections (14 to 17) of a conductor lane (6) which are placed sequentially in direction of the progression within the winding overhang (9) are arranged in halves of layers (12, 13) of the conductor layer (11) at different distances to the air gap.

2. A three-phase electric machine in accordance with claim 1,
wherein the conductor height of the conductor lanes (5 to 7) in the magnetic field of the height of the layer and in the partial areas running in direction of the progression corresponds to one half the height of the layer, and wherein the change of the conductor height occurs at a distance in front of the face of the soft magnetic body that corresponds to approximately half the width of the groove.

3. A multi-phase electric machine in accordance with claim 1,
wherein the connection (20) of partial conductor sections (14 to 17) of a conductor lane (6) from three-phase conductor layers (21 to 23) which are stacked parallel to the groove depth occurs at locations of the conductor which lie in the magnetic field.

4. A process for the manufacture of a three-phase electric machine with a layered winding, the conductor lanes (5 to 7) of said winding being arranged in a soft magnetic body, said conductor lanes being of different phases and being arranged in one conductor layer (11),
wherein all three conductor lanes of a three-phase winding layer are manufactured concurrently in one process by alternating application of layers of insulating material and conductor material.

5. A process for the manufacture of a three-phase electric machine in accordance with claim 4,
wherein for the manufacture of a three-phase conductor layer only four masks, two each for the insulation layers and the conductor layers, are successively employed.

## Revendications

1. Machine électrique triphasée avec un bobinage rangé par couche, dont les cordes conductrices (de 5 à 7) sont positionnées partiellement dans un corps magnétique doux, et les cordes conductrices des différentes phases sont positionnées dans une couche conductrice (11), il est caractéristique que toutes les cordes conductrices (de 5 à 7) d'une couche conductrice triphasée (11) sont identiques, et que les parties du conducteur (de 14 à 17) d'une corde conductrice (6), qui se succèdent dans la direction de mouvement dans une tête de bobine (9), sont positionnées dans des moitiés de la couche (12, 13) qui font partie de la couche conductrice (11) avec des différentes distances à l'entrefer.

2. Machine électrique triphasée selon la revendication no. 1, dont il est caractéristique que la hauteur du conducteur des cordes conductrices (de 5 à 7) dans le champ magnétique est identique avec la hauteur de la couche, et que, dans les parties qui vont dans la direction de mouvement, elle est identique avec la moitié de la hauteur de couche, et le changement de la hauteur du conducteur a lieu toujours dans une distance d'une moitié de la largeur de la rainure devant le front du corps magnétique doux.

3. Machine électrique polyphasée selon la revendication no. 1, dont il est caractéristique que la jonction (20) des parties du conducteur (de 14 à 17) d'une corde conductrice (6) a lieu dans des couches conductrices triphasées (de 21 à 23) qui sont mises l'une sur l'autre dans la direction de la profondeur de la rainure, et qui se trouvent dans des parties du conducteur qui sont dans le champ magnétique.

4. Procédure pour la fabrication d'une machine électrique triphasée avec un bobinage rangé par couche, dont les cordes conductrices sont positionnées partiellement dans un corps magnétique doux, avec les cordes conductrices des différentes phases positionnées dans une couche conductrice (11), il est caractéristique que les trois cordes conductrices d'une couche de bobinage triphasée, sont fabriquées en même temps dans une phase de fabrication, en appliquant alternamment des couches de matière d'isolation et de matière du conducteur.

5. Procédure pour la fabrication d'une machine électrique triphasée selon la revendication no.4, dont il est caractéristique, que pour la fabrication d'une couche du conducteur triphasée, on n'utilise que quatre masques en suite, deux pour les couches d'isolation et les deux autres pour les couches du conducteur.
